# EUROPÄISCHE PATENTANMELDUNG

(11) **EP 4 016 960 A1**
(43) Veröffentlichungstag der Anmeldung: **22.06.2022**
(21) Anmeldenummer: 20216029.7
(22) Anmeldetag: 21.12.2020
(51) Int. Cl.: H04L 29/12, G05B 19/418

(54) **VERFAHREN UND DIENSTE ZUR ADRESSIERUNG EINER INDUSTRIELLEN ANWENDUNG AUF EINEM INDUSTRIELLEN KNOTEN IN EINEM INDUSTRIELLEN CLUSTER MIT VERWALTETEN RESSOURCEN**

(71) Anmelder: Siemens Aktiengesellschaft, 80333 München (DE)
(72) Erfinder: Albrecht, Harald, 90475 Nürnberg (DE); Dreher, Michael, 71229 Leonberg (DE); Höme, Stephan, 91126 Schwabach (DE); Talanis, Thomas, 91336 Heroldsbach (DE)

(57) **Zusammenfassung**

Die Erfindung betrifft ein Verfahren und Dienste zur Adressierung einer industriellen Anwendung (IA) auf einem industriellen Knoten (100; IED) in einem industriellen Cluster (IC; 300) mit verwalteten Ressourcen. Dabei wird in einem ersten Schritt mittels eines DNS-Ingress-Dienstes (DIC) wiederkehrend in dem Cluster (300) konfigurierte Ingress-Ressourcen und zugehörige Knoten-Ressourcen ermittelt und ausgewertet, wobei bei der Auswertung der Knoten-Ressourcen anhand derer Host-Elemente deren Pfade zu den Ingress-Ressourcen ermittelt werden. In einem zweiten Schritt wird mittels eines Anwendungs-Ingress-Dienstes (IEC; 320) zu den Knoten-Ressourcen auf Basis eines zugeordneten industriellen Anlagenkennzeichens ein Name zur Registrierung im allgemeinen DNS-Dienst (211; EDNSS) gebildet. In einem dritten Schritt werden mittels des DNS-Ingress-Dienstes (DIC) im allgemeinen DNS-Dienst (211; EDNSS) Adressinformationen zu einer der Anwendung zugeordneten Ingress-Komponente aus den Ingress-Ressourcen zusammen mit dem gebildeten Namen registriert. Schließlich wird in vierten Schritten zur Adressierung der Anwendung (IA) eine das Anlagenkennzeichen umfassende Anfragemeldung an den allgemeinen DNS-Dienst (211; EDNSS) gesendet und in einer Antwortnachricht des allgemeinen DNS-Dienstes (211; EDNSS) der dazu registrierte Pfad / Adressinformation zurückgemeldet und zur Adressierung der Anwendung (IA) verwendet. Somit ist insbesondere im Kubernetes-Umfeld der aktuelle Zugang zu der Anwendung (IA) anhand ihres jeweiligen Anlagenkennzeichens registrierbar und auflösbar.

## Beschreibung

In der industriellen Automatisierungstechnik werden in lokalen Automatisierungsnetzwerken industrielle Steuerungen, also speicherprogrammierbare Steuerungen oder andere industrielle Steuerungen, zusammen mit Sensoren und Aktoren, den sogenannten Feldgeräten, betrieben. Vermehrt besteht der Wunsch, diese ehemals lokal isolierten Automatisierungsnetze zu erweitern bzw. von außen zugreifbar zu machen, um beispielsweise Anwendungen zur Steuerung, Regelung, Visualisierung, Datenauswertung und dergleichen betreiben zu können. Solche Anwendungen werden vermehrt auf sogenannten EDGE-Geräten oder "Industrial Edge-Devices" installiert, die die erforderliche Rechenleistung zur Verfügung stellen. Überdies haben diese EDGE-Geräte regelmäßig Zugang zu anderen Netzwerken, insbesondere auch dem Internet, und üben somit eine Gateway-Funktionalität aus. Insbesondere solche Anwendungen, die eine hohe Rechenleistung oder eine Verbindung zu öffentlichen Netzwerken, beispielsweise der sogenannten Cloud, erfordern, werden üblicherweise nicht auf den industriellen Steuerungen installiert, sondern auf diesen zugeordneten EDGE-Geräten. Die hierbei oft verwendeten Anwendungen, sogenannte Apps oder Industrial Apps, werden aus Gründen der Datensicherheit, der Skalierbarkeit und der besseren Kontrolle und Verwaltung oft in Software-Containern installiert, die in eigenen Laufzeitumgebungen ("Pods") der EDGE-Geräte ("Nodes"; Knoten) ablaufen. Zur Verwaltung der EDGE-Geräte mit den Container-Laufzeitumgebungen wird häufig Kubernetes eingesetzt, das ist eine sehr gebräuchliche Open-Source Lösung zur Installation, Ablaufkontrolle und Verwaltung von containerbasierten Anwendungen. Andere Lösungen zur Verwaltung und "Orchestrierung" sind ebenso bekannt und auch gebräuchlich.

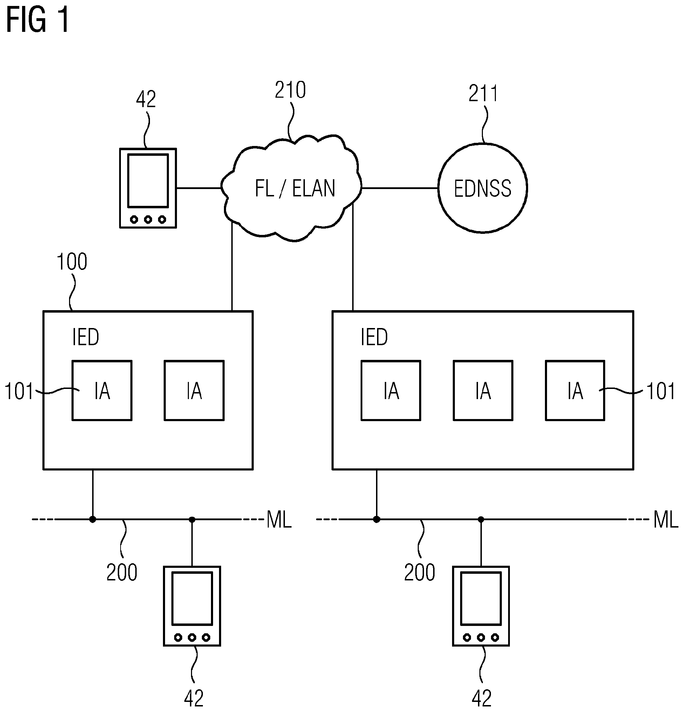

Eine solche Anordnung ist in der Figur 1 dargestellt. Anwender industrieller Automatisierungstechnik wollen einfach und bequem mit ihren Anwender-Geräten / Web-Clients (42, Smartphone/Tablet Webbrowser, PC-Webbrowser, et cetera) auf ihre vielen Industrial Apps (IA, 101), im folgenden auch "Industrielle Anwendungen" genannt, zugreifen, beispielsweise um Antworten auf (Produktions-) Fragen zu bekommen. Die Industrial Apps (IA, 101) sind hierbei auf Industrial Edge-Devices (IED, 100) installiert und diese IEDs sind ihrerseits Teil der Anlagenautomatisierung einer Produktion. Dadurch sind die IEDs (100) einerseits beispielsweise örtlich direkt mit Maschinen- und Zellennetzen (ML, 200) verbunden, andererseits mit dem Fabriknetz / Factory LAN - oder Unternehmensnetzwerk (Enterprise Network / Enterprise LAN - FL bzw. ELAN, 210).

Wegen der freien Verschiebbarkeit der industriellen Anwendungen (101) im Zuge der Erstinstallation und im Zuge einer nachträglichen Optimierung (sog. Load-Balancing) ist zunehmend ein Adressierungsdienst anstelle einer statischen Adressierung (beispielsweise anhand fester IP-Adressen oder fester Pfade) gefordert. Man kann sich dazu eine gebräuchliche DNS-Infrastruktur zu Nutze machen. Jedoch sind Automatisierungsnetzwerke und DNS-Namen von Automatisierungsgeräten heute in einer "klassischen" DNS-Infrastruktur analog zu Büro-Geräten eingebunden, insbesondere herrscht oftmals die Geräte-Sicht bis in die quasi-statische Verwaltung des Firmen-DNS (211) (lokaler DNS-Server) vor.

Es besteht also ein Bedarf, die Adressierung von industriellen Anwendungen insbesondere im dynamischen Umfeld der Edge-Geräte zu vereinfachen.

Für Industrial Apps (101) ist somit ein dynamische Nachführen des Firmen-DNS (211) anhand der installierten Basis an Industrial Apps (101) notwendig, insbesondere in der DNS-Hierarchie (AKZ - Anlagenkennzeichen) der Automatisierung. Die Anlagenkennzeichen sind ein gebräuchliches Ordnungsmittel in der Projektierung industrieller Netze und bezeichnen Anwendungen und andere Objekte eindeutig. Dies bedeutet, dass heutzutage die DNS-gestützte Adressierung zwar das Edge-Gerät ähnlich zu einem Büro-Computer unterstützt, aber die mit industriellen Kennzeichnungsschema ("Anlagenkennzeichen") projektierten Industriellen Anwendungen, also die Industrial Apps IA, mit den allgemeinen DNS-Diensten nicht ohne weiteres anhand des ihnen jeweils zugeordneten Anlagenkennzeichens aufgefunden und adressiert werden können.

Für die Anwender-Geräte (42) muss also ein möglichst direkter Zugriff aus diesen Netzwerken möglich sein. Das Ansprechen (Adressieren) der Industrial Apps (IA, 101) soll über DNS-Namen anstatt von IP-Geräteadressen geschehen, dazu stellt die IT (Informations-Technologie bzw. die Verwaltung der Firmennetze) des Anwenders einen firmenweiten Enterprise DNS Service (EDNSS, 211) bereit. Darüber hinaus sollen die DNS-Namen nicht einem Namensbereich des (Cloud-) Rechenzentrums zuordnet sein, sondern Teil der Anlagenkennzeichnungs-Hierarchie (beziehungsweise deren Abbildung auf das DNS) sein. Grundsätzliche technische Probleme in Web-Applikationen (wie auch den Industrial Apps, 101) bedingen, jeder einzelnen IA einen eigenen DNS-Namen zuzuteilen, anstatt das Umschreiben von URL-Pfaden oder separate TCP-Ports zu benutzen. In der Cloud (und auch in der Cluster-IT) ist diese Vorgehensweise mit separaten DNS-Namen seit längerer Zeit üblich, weil es aufwandsarm und technisch effizient umzusetzen ist. Im hier gezeigten Zusammenhang bezeichnet "Cluster" allgemein eine Gruppe oder Menge von Geräten, die logisch oder organisatorisch in einem Bezug stehen (beispielsweise eine Gruppe Edge-Geräte); der Begriff ist also nicht auf das Ausführungsbeispiel einer Verwaltung mittels Kubernetes beschränkt.

Es ist also eine Aufgabe der vorliegenden Erfindung, eine neuartige technische Lösung anzugeben, die einerseits den industriellen Anwendern und auch den Entwicklern von Industrial Apps die technischen Tücken des DNS-Managements von Industrial Apps verbirgt (320) und zugleich eine der Anwender-IT genehme technisch-organisatorische Lösung (310) darstellt. Im Gegensatz zu den technischen Lösungen in der Cloud soll auf die spezifischen Belange und Schnittstellen der IT industrieller Anwender eingegangen werden.

Das Problem wird heute häufig durch URL-Adressierung gelöst. Grundsätzlich sind dabei heute drei verschiedene Ansätze bekannt, um die Aufgabe zu lösen, eine Vielzahl von Web-Applikationen eindeutig hinter HTTP Load Balancern respektive Reverse HTTP Proxys zu adressieren:
1. jeweils *eigene* DNS-Name für jede einzelne Web-Applikation, wobei die Web-Applikation dabei grundsätzlich nur auf dem/den Standard-Ports 80/443 (HTTP/HTTPS) erreicht wird.
2. ein *gemeinsamer* DNS-Name und Unterscheidung der Web-Applikationen über jeweils eigene TCP/HTTP-Ports (80, 81, 82, ...), und
3. ein *gemeinsamer* DNS-Name in Kombination rein mit Standard-Port(s) 80 (443), dafür aber *verschiedene* URL-Pfade ("/app1/...", "/app2/...") zu den Wurzeln "/..." der verschiedenen Web-Applikationen.

### Zu 1. Eigene DNS-Namen:

In der Cloud und in Rechenzentren werden die DNS-Namen der einzelnen Web-Applikationen entweder "flach" innerhalb einer bestimmten Eltern-DNS-Domäne verwaltet (app1.example.com, app2.example.com, ...) oder aber händisch einzeln auf vollständig verschiedene DNS-Domänen rangiert (blafasel.com=app1, rehctschraibng.de=app2).

Dieser typischerweise für Web-Applikationen in der Cloud gewählte Weg lässt sich unseligerweise direkt nicht auf das industrielle Umfeld übertragen. Ein Grund hierfür ist, dass die DNS-Namen nicht mehr nur in genau einer Ebene variabel sind, wie im Fall (*mehrere* Webapp in *einem* Cluster), sondern in zwei Ebenen: *mehrere* (*viele*) Industrial Apps (101) in *mehreren* IED (100). Weiterhin sind die IEDs (100) aufgrund der AKZ-Struktur oftmals in *viele verschiedene* Positionen und Hierarchiestufen des Anlagen-DNS eingefügt. Wie beispielsweise app1.brfx31md12ost.automation.example.com und app1.xkrmf2west1.automation.example.com, wenn der gleiche Typus App dabei mehrfach an verschiedenen Positionen in der Anlage sowie im AKZ auftritt.

Ein derartig gestreuter Eintrag von DNS-Namen über mindestens zwei Ebenen hinweg wird aufgrund des rein automatisierungsspezifischen Anwendungsfalls von Cloud- und RZ-Anbietern (Rechenzentren-Anbieter, "Web-Services") heute deshalb nicht unterstützt und bislang nicht benötigt. Es ist heute ein hohes Maß an manueller Konfigurationsarbeit über verschiedene Systeme und Applikationen hinweg erforderlich.

### Zu 2. Ein DNS-Name und viele TCP-Ports:

Die technische Realisierung des Zugangs zu vielen Industrial Apps (101) mit nur einem DNS-Namen pro IED (100), aber über viele (eindeutige) TCP/HTTP-Ports scheitert heute regelmäßig an den technisch-organisatorischen Gegebenheiten industrieller Automatisierungsnetze. Insbesondere müssen hierfür die Firewalls vor einzelnen Maschinen oder Fertigungszellen immer passend zur aktuellen Installationsbasis der vielen Industrial Apps (101) auf vielen Industrial Edge-Geräten (100) zeitnah und korrekt konfiguriert werden (mit vielen Ports für https://sjdg436.example.com:445/..., https://sjdg436.example.com:446/..., usw.). Ein solches Vorgehen wird von industriellen Anwendern als nicht praxisgerecht abgelehnt.

### Zu 3. Ein DNS-Name und viele URL-Pfad-Stämme:

Die scheinbar beste technische Lösung ist der Einsatz nur eines DNS-Namens pro IED (100) und nur genau einem/zwei Ports 80/443: hierbei werden die unterschiedlichen Industrial Apps (101) über in ihre URL-Pfade eingefügte und jeweils eindeutige Stamm-Pfade unterschieden. Wie beispielsweise https://sjdg436.example.com/appl/... und https://sjdg436.example.com/app2/.... Load Balance- und HTTP Reverse Proxys verfügen heute über entsprechende Funktionen, um solche URLs auf verschiedene Web-Applikationen weiterzuleiten und gleichzeitig die URL-Pfade entsprechend zu verändern: so wird aus https://sjdg436.example.com/appl/... dann https://192.166.66.6/.... Ein wesentliches und heutzutage praktisch nicht lösbares Problem ist hierbei, dass die Web-Clients (42) der Anwender die Web-Applikationen anders adressieren müssen, als die Web-Applikation (Industrial App, 101) selbst annimmt. In praktisch allen Web-Applikationen/IndApps (Industrial Apps) mit nicht-trivialer Seiten- und Webresourcen-Struktur ist es unmöglich, die gesamte Web-Applikation intern und extern rein nur mit relativen URL-Bezügen fehlerlos umzusetzen. Zwar bietet manche Reverse Proxys eine Funktion, um die von den Industrial Apps and die Web Clients zurück übertragenen Antworten nach "fehlerhaften" URLs zu durchsuchen und zu ersetzen, jedoch zeigt die Praxis, dass es in allen nicht-trivialen Einsatzfällen zu falschen oder unterlassenen Umschreibungen kommt. Ein ausreichend korrekter Betrieb kann nicht sichergestellt werden. Tatsächlich schreiben solche gut meinenden Reverse Proxys sogar URL für andere Protokolle um, sobald der Host- und Pfadanteil in ihre "Beuteschemata" passt, was zu nicht hinnehmbaren Fehlern führt.

Zur Erreichbarkeit: Cloud-Plattformen bieten heute regelmäßig eine automatische Verknüpfung zwischen den HTTP Load Balancern und Reverse HTTP Proxys der jeweiligen Cloud-Plattform und den Services beziehungsweise Web-Applikationen in der Cloud (Cluster). Diese "Eingänge" sind beim Cloud-Anbieter platziert. Bei industriellen Clustern sind die Industrial Edge-Geräte (100) zwar logisch dem (Cloud-) Cluster zugeordnet, die Geräte befinden sich jedoch weiterhin beim industriellen Anwender in dessen Produktionsanlagen. Der Netzwerkverkehr eines Web-Clients (42) in den Produktionsanlagen oder im Firmennetzwerk müsste dementsprechend erst einmal das Firmennetz verlassen, dann die Eingänge der Cloud-Plattform zu benutzen, um anschließend beispielsweise über ein VPN bis zu den Industrial Apps (101) auf den IEDs (100) zu gelangen. Industrie-Anwender fordern hierfür einen direkten lokalen Zugang zu den Industrial Apps (101), ohne den Umweg über die Eingänge ("Ingress") der Cloud-Plattform. Zumindest der Betrieb mehrerer Reverse HTTP Proxys *innerhalb* eines Clusters ist Stand der Technik, ebenso wie das gezielte Installieren ("Deployment") entweder auf alle Arbeitsknoten oder nur auf speziell markierte Arbeitsknoten mittels Kubernetes Daemon-Sets.

Bei modernen Verwaltungssystemen, beispielsweise Kubernetes, erfolgt der Zugriff auf Anwendungen ("Apps") gewöhnlich über zentrale Zugriffsstrukturen, die im Folgenden Ingress-Komponenten (oft kurz: Ingress) genannt werden sollen. Sie stellen also den Zugriffspunkt "von außen" dar. Dies bedeutet, dass für eine Nutzung oder allgemein für einen Zugriff auf eine Anwendung ein entsprechender Request (Anfragemeldung) an den Ingress gerichtet wird. Dazu ist ein Pfad oder eine Adressinformation für den zuständigen "Ingress" notwendig.

Die erfindungsgemäße Aufgabe wird insbesondere durch ein Verfahren nach Patentanspruch 1, einen Anwendungs-Ingress-Dienst nach Patentanspruch 5 und einen DNS-Ingress-Dienst nach Patentanspruch 6 gelöst.

Dabei wird ein Verfahren zur Adressierung einer industriellen Anwendung auf einem industriellen Knoten in einem industriellen Cluster mit verwalteten Ressourcen vorgeschlagen, wobei die Adresse der industriellen Anwendung in einem allgemeinen DNS-Dienst registriert wird, und wobei zur Adressierung der industriellen Anwendung die Adresse aus dem allgemeinen DNS-Dienst abgerufen wird. Dabei wird in einem ersten Schritt mittels eines DNS-Ingress-Dienstes wiederkehrend in dem Cluster konfigurierte Ingress-Ressourcen und zugehörige Knoten-Ressourcen ermittelt und ausgewertet, wobei bei der Auswertung der Knoten-Ressourcen anhand derer Host-Elemente deren Pfade zu den Ingress-Ressourcen ermittelt werden. Dabei sind Ingress-Ressourcen und Knoten-Ressourcen Datenstrukturen, mit denen andere Ressourcen (Knoten, Anwendungen, Dienste oder deren datentechnische Zugänge) in Verwaltungssystemen wie z.B. Kubernetes beschrieben werden. In einem zweiten Schritt wird mittels eines Anwendungs-Ingress-Dienstes zu den Knoten-Ressourcen auf Basis eines zugeordneten industriellen Anlagenkennzeichens ein Name zur Registrierung im allgemeinen DNS-Dienst gebildet. In einem dritten Schritt werden mittels des DNS-Ingress-Dienstes im allgemeinen DNS-Dienst Adressinformationen zu den der Anwendung zugeordneten Ingress-Komponente zusammen mit dem gebildeten Namen registriert. Schließlich wird in vierten Schritten zur Adressierung der Anwendung eine das Anlagenkennzeichen umfassende Anfragemeldung an den allgemeinen DNS-Dienst gesendet und in einer Antwortnachricht des allgemeinen DNS-Dienstes der dazu registrierte Adressinformation zurückgemeldet und zur Adressierung der Anwendung verwendet. Somit ist insbesondere im Kubernetes-Umfeld die aktuelle Zugriffsinformation für einen Zugriff auf die Anwendung anhand ihres jeweiligen Anlagenkennzeichens registrierbar und auflösbar.

Die Aufgabe wird außerdem durch einen Anwendungs-Ingress-Dienst und durch einen DNS-Ingress-Dienst zur Durchführung des Verfahrens gelöst.

Besonders vorteilhafte Ausgestaltungen des Verfahrens sind in den abhängigen Patentansprüchen angegeben.

Vorteilhaft werden die Ressourcen und Knoten im industriellen Cluster durch ein Kubernetes-Verwaltungssystem verwaltet. Die dabei verwendeten Datenobjekte, die sog. Knoten-Ressourcen und Ingress-Ressourcen, können zur Beschaffung der für die Registrierung der Anwendungen im allgemeinen DNS-Dienst ausgewertet werden.

In einer vorteilhaften Ausgestaltung werden durch den DNS-Ingress-Dienst Pfade mit identischem Host-Anteil gruppiert.

Damit ergeben sich komprimierte DNS-Datenbanken mit einer schnelleren Reaktionszeit. Außerdem wird die Zahl der notwenigen DNS-Requests verringert, weil die gruppierten Einträge jeweils eine Vielzahl Anwendungen abdecken.

In einer vorteilhaften Variante wird in dem zweiten Schritt der Anwendungs-Ingress-Dienst eine unvollständige Host-Information der Anwendung bei deren Registrierung für einen bestimmten Knoten zu einer vollständigen Host-Information ergänzt, wobei der unvollständigen Host-Information eine Adressierungsinformation für den Knoten hinzugefügt wird. Somit können unvollständige Host-Informationen, sog. Templates, bei der Installation (Deployment) der Anwendungen vervollständigt werden.

Ein Ausführungsbeispiel des erfindungsgemäßen Verfahrens wird nachfolgend anhand der Zeichnungen beschrieben; damit werden gleichzeitig die erfindungsgemäßen Dienste bzw. Server erläutert.

Dabei zeigen:
- Figur 1: eine Architektur mit industriellen Anwendungen und industriellen Edge-Geräten,
- Figur 2: die Architektur erweitert mit einem Anwendungs-Ingress-Dienst und einem DNS-Ingress-Dienst,
- Figur 3: den Informationsfluss mit einem DNS-Ingress-Dienst, und

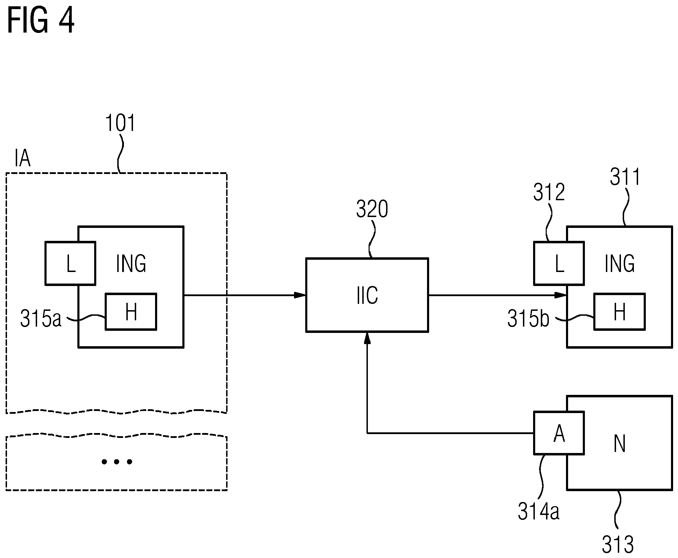

- Figur 4: die Namensbildung anhand des Anlagenkennzeichens einer industriellen Anwendung durch einen Anwen-dungs-Ingress-Dienst.

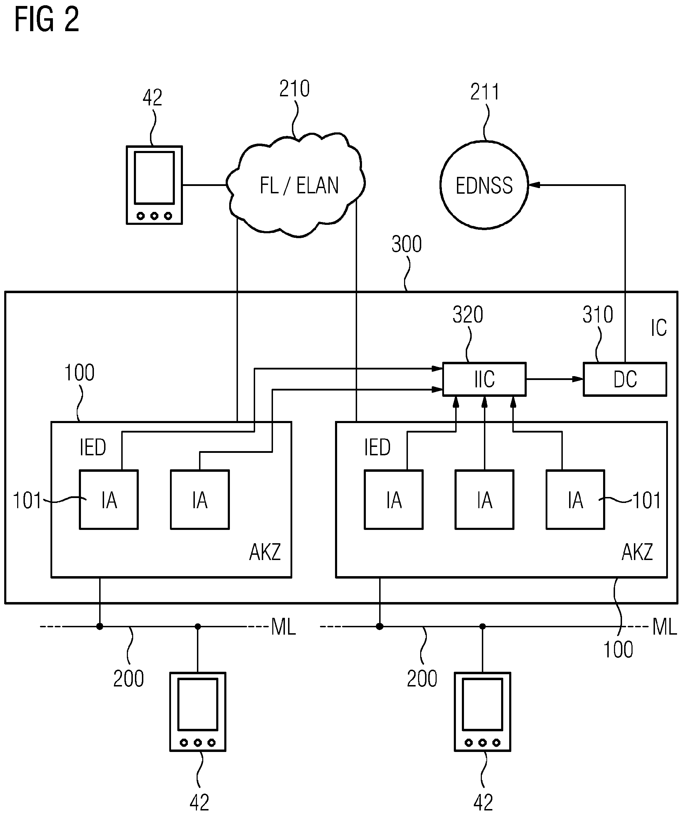

Die Erfindung umfasst, wie in Figur 2 abgebildet, strukturell zwei neuartige Teile, nämlich zum einen einen neuartigen DNS-Ingress-Dienst, der in diesem Beispiel durch den DNS-Ingress-Controller (DIC, 320) gebildet wird. Dieser registriert anhand der aktuellen industriellen Anwendungen IA, kurz IndApps oder IAs, die erforderliche DNS-Einträge in einem externen DNS-System (beispielsweise der Kunden-IT). Zum anderen umfasst die Erfindung einen neuartigen Anwendungs-Ingress-Dienst, der im Folgenden durch den IndApp-Ingress-Controller (IIC, 310) gebildet ist. Dieser erzeugt die korrekten DNS-FQDNs (Fully Qualified Domain Names für den DNS-Dienst) für IndApps IA auf den jeweiligen Edge-Geräten (IED) entsprechend des Kunden-AKZ (industrielles Anlagenkennzeichen).

Wie bereits erwähnt erfolgt bei modernen Verwaltungssystemen, beispielsweise Kubernetes, der Zugriff auf Anwendungen ("Apps") gewöhnlich über zentrale Zugriffsstrukturen, die Ingress-Komponenten (oft kurz: Ingress). Das sind insbesondere L3-Load-Balancer oder Proxys (Reverse Proxys). Diese werten die sog. Ingress-Ressourcen aus, die prinzipiell Konfigurationsmittel (Datenstrukturen) sind, die einen Bezug zwischen einer nach "außen" sichtbaren Beschreibung einer Anwendung (App) und dem "Knoten" herstellt, also die "Maschine", auf der die Anwendung installiert ist. In einer weiteren "Ressource", der Knoten-Ressource, die wiederum eine Datenstruktur darstellt, ist der Zusammenhang zwischen dem im Bezug benannten Knotens und dessen Netzwerkadresse registriert.

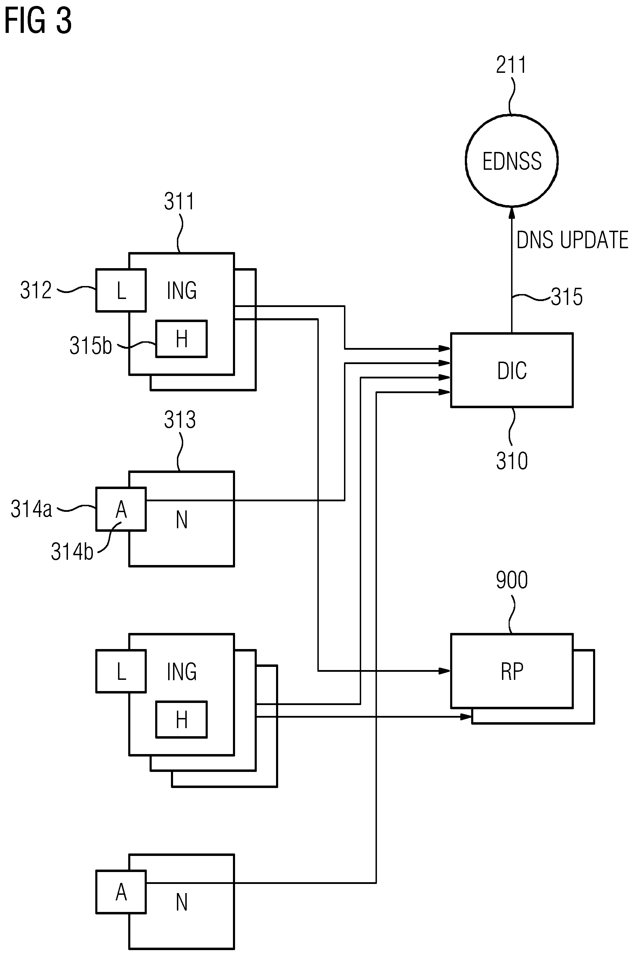

Nachfolgend soll zunächst anhand der Figur 3 der Registrierungsvorgang auf dem allgemeinen DNS-Dienst (EDNSS - Enterprise Domain-Name-System Server) betrachtet werden, also die Funktionalität des sogenannten DNS-Ingress-Controllers (DIC, 310). Der IndApp-Ingress-Controller (IIC, 320) ermöglicht es, dass für IndApps (IA, 101) die erforderlichen DNS-Namen automatisch berechnet werden, die danach vom DNS-Ingress-Controller (DIC, 320) in die Kunden-IT und damit den allgemeinen DNS-Dienst übermittelt werden.

Der DNS-Ingress-Controller (DIC, 310) kann wahlweise als Teil des Industriellen Clusters (IC, 300) ausgeführt sein, deren Teil die Industrial Edge-Geräte (100) sind; im Fall von Kubernetes ist eine technisch vorteilhafte Ausgestaltung ein sogenannter custom controller (siehe u.a. https://itnext.io/how-to-create-a-kubernetes-custom-controller-using-client-go-f36a7a7536cc).

Der DIC (310) kann stattdessen auch Teil des Backends zur Verwaltung der Edge-Geräte sein und damit nicht immer zwangsläufig Teil des IC (300).

Der DIC (310) überwacht laufend die im Industriellen Cluster (IC, 300) konfigurierten Ingress- (311) und Node- (313) Ressourcen, die das Routing zu Anwendungen in einem Kubernetes-Cluster und die verfügbaren Knoten (also HW-Plattformen, insbesondere Edge-Devices) beschreiben.

Ingress-Ressourcen sind also ein Konfigurationsmittel (beispielsweise in Kubernetes) und beschreiben generell die der Außenwelt außerhalb des IC zugänglich zu machenden Services und insbesondere Industrial Apps (IA, 101). Andere Lösungen zur Verwaltung und "Orchestrierung" arbeiten mit ähnlichen Ressourcen zur Beschreibung der Anbindung der "Außenwelt" an ein einzelnes IED (Industrial Edge Device) oder ein Cluster von IEDs, die möglicherweise anders benannt sind; auch diese sollen jedoch im Folgenden als Ingress-Ressourcen bezeichnet werden. Nachfolgend ist eine Ingress-Ressource (311) beispielhaft aufgeführt:
kind: Ingress # (311)
metadata:
   name: appl-edgel
labels:
   edge.diti.siemens.com/ingress: edge1 # (312)
spec:
   rules:
      - host: app1.akz1.kunde.com # (315b)
      - http:
   paths:
      - backend:
         serviceName: appl-edgel
         servicePort: 80

Die Ingress-Ressource ING trägt dabei eine neuartige Markierung (312) in Form einer Markierung bzw. Labels L mit dem eindeutigen Namen "edge.diti.siemens.com/ingress". Diese Markierung (312) dient dem DIC (310) dazu, zwischen allgemeinen Ingress-Ressourcen für den Cluster und dessen zentralen Zugänge zu Services im Cluster und den speziellen Ingress-Ressourcen für IndApps - IAs (101) auf den IEDs (100) zu unterscheiden. Der Wert des Labels (312) kann beispielsweise der Name derjenigen Knoten-Ressource (313) sein, zu der die Ingress-Ressource beziehungsweise die IA zugeordnet sind. Prinzipiell kann auch jeder beliebige andere Wert benutzt werden, solange darüber die Beziehung von ING (311) zu N (313) eindeutig ausgedrückt wird. Technisch ist die Darstellung der Beziehung eine technisch vorteilhafte Optimierung, die den beteiligten DIC (310) und einem etwaigen Reverse-Proxyserver (RP; 900) einen raschen Zugriff auf nur für den einzelnen DIC und RP relevanten Satz von INGs (311) aus dem Satz aller INGs ermöglicht.

Weiterhin spezifiziert die Ingress-Ressource ING noch den FQDN (Fully Qualified Domain Name) im AKZ des Kunden-DNS, der einer IA (101) zugeordnet ist, in Form des Host-Elements H (315b).

Die Markierung / Label L (312) wird weiterhin von den RPs (Reverse Proxys, 900) ausgewertet, wobei die RPs auf den einzelnen IEDs (100) ausgeführt werden. Der Wert einer Markierung (312) identifiziert hierbei einen einzelnen RP (900) auf genau dem IED (100), auf dem sich sowohl der RP als auch der Service/IA befinden. Jeder RP wird so konfiguriert, dass er nur auf das jeweils ihm zugeordnete Label(name)-Wert-Paar reagiert, wie beispielweise "edge.diti.siemens.com/ingress: edgel". Die RPs (900) werten weiterhin insbesondere den FQDN und die Elemente "serviceName" und "servicePort" der markierten Ingress-Ressourcen aus. Der DIC (310) wertet weiterhin die Markierungen (314a, 314b) an Knoten-Ressourcen (N, 313) von IEDs (100) aus, die beispielhaft in der Form von Annotations A ausgeführt sind. Hierbei bezeichnet (314a) das vom Kunden vergebene AKZ (Anlagenkennzeichen) in DNS-Form und (314b) die dem IED zugewiesene(n) IP-Adresse(n) im/in Automatisierungsnetzwerk/en.

Eine exemplarische Knoten-Ressource N (beispielsweise für ein IED) ist nachfolgend dargestellt:
kind: Node # (313)
metadata:
   annotations:
   edge.diti.siemens.com/akz:
   "akz1.automation.example.com" # (314a) edge.diti.siemens.com/ip: "1.2.3.4" # (314b)

Der DIC (310) führt dabei initial und danach bei Änderungen der Clusterkonfiguration wiederkehrend die nachfolgenden Schritte aus:
1. Ermittle die Menge aller FQDNs anhand der "host" Elemente (315b) aller derjenigen Ingress-Ressourcen, die mit einer Markierung (312) in Form eines Labels "edge.diti.siemens.com/ingress" versehen sind.
2. Bilde Gruppen von FQDNs anhand der FQDNs ohne deren am weitesten links stehenden DNS-Labels, wie die Gruppe "akz1.kunde.com" für die FQDNS "app1.akz1.kunde.com" und "app2.akz1.kunde.com".
3. Für jeden dieser Gruppen-FQDN:
   a. ermittle den zugehörigen Primären Namensserver anhand einer DNS-Abfrage zum SOA-RR des Gruppen-FQDN. Die nachfolgenden Registrierungen in Form von DNS UPDATEs (315) werden auf dem ermittelten Primären Namensserver durchgeführt.
   b. bestimme die IP-Adresse(n), die dem Gruppen-FQDN zugeordnet werden sollen: dazu filtert der DIC (310) diejenige Knoten-Ressource (N, 313) heraus, die per (314a) mit dem AKZ DNS-FQDN des IEDs (100) markiert ist. Die zu registrierende(n) IP-Adressen befinden sich dann in der Markierung (314b).
   c. registriere den Gruppen-FQDN mit der zuvor bestimmten IP-Adresse(n) in Form von A und AAAA RRs, je nach Menge und Typ der in der Markierung (314b) textuell aufgelisteten IPv4 und/oder IPv6-Adressen beispielsweise:
      akz1.kunde.com A 1.2.3.4 (IPv4)
      akz1.kunde.com AAAA fc80::bad:cafe (IPv6)
   d. Entweder ... oder, je nach Konfiguration-Option, die beispielweise technisch als eine Konfigurations-Markierung am DIC (310) ausgeführt sein kann:
      I. registriere alle (Host/IA-) FQDNs des Gruppen-FQDNs in Form einer entsprechenden Vielzahl von CNAME RRs, die auf den Gruppen-FQDN als kanonischen Namen verweisen.
         Beispiele:
         app1.akz1.kunde.com CNAME akz1.kunde.com
         app2.akz1.kunde.com CNAME akz1.kunde.com
      II. (alternativ zu I.): registriere einen einzelnen sogenannten Wildcard-RR mit dem Gruppen-FQDN; zu beachten ist, dass Wildcard-RRs teilweise von DNS-Servern ignoriert werden und zudem den unerwünschten Seiteneffekt haben, dass sich eigentlich ungültige FQDNs nicht-existenter IAs (101) immer erfolgreich zu IP-Adressen von IEDs (100) auflösen lassen und stattdessen solche Fehler nur über HTTP-Fehlermeldungen wie Status 502 Bad Gateway und 404 Not Found abgeleitet werden können.
         Wildcard RRs sind in RFC 1034 erwähnt, "Domain Names - Concepts and Facilities" (https://tools.ietf.org/html/rfc1034), insbesondere Abschnitt 4.3.3, "Wildcards". Die so genannten "Wildcard" RRs dienen als Schablonen, um daraus weitere RRs zu synthetisieren, und zwar in der Form "*.domain", wobei die Wildcard "*" nur genau einmal und nur in der führenden Position erlaubt ist.
         Beispiel:
         *.akz1.kunde.com CNAME akz1.kunde.com .
   e. Lösche alle nicht mehr gültigen FQDNs.
      Das Aktualisieren derjenigen DNS-Informationen in einem Kunden-IT-DNS (211) erfolgt über sogenannte DNS UPDATEs, siehe RFC 2136, "Dynamic Updates in the Domain Name System (DNS UPDATE)"
      (https://tools.ietf.org/html/rfc2136). Sie werden in der Regel gesichert, siehe dazu RFC 3007, "Secure Domain Name System (DNS) Dynamic Update" (https://tools.ietf.org/html/rfc3007). Insbesondere ist heute Stand der Technik der Einsatz der TSIG, siehe RFC 2845, "Secret Key Transaction Authentication for DNS".

Der Anwendungs-Ingress-Dienst und somit der IndApp-Ingress-Controller (IIC, 320) kann wahlweise als Erweiterung einer "Cluster Control Plane" ausgeführt sein (beispielsweise als Kubernetes custom controller), oder auch als eine Komponente des Backends zum Verwalten der Edge-Knoten. In dieser zweiten Ausgestaltungsvariante kann das Backend sich außerhalb des Clusters der Edge-Knoten befinden. Im Folgenden ist die jeweilige Ausgestaltung für die grundsätzliche Funktion dieser Erfindung ohne Bedeutung.

Die Aufgabe des IndApp-Ingress-Controller IIC (320) ist es, diejenigen Ingress-Ressourcen (311), die Teil einer Industrial App - IndApp (IA, 101) sind, aus ihrer noch nicht an eine spezielle Industrial Edge gebundenen Form mit unvollständigen Host-Elementen (H, 315a), also einem "Template", in ihre endgültige Form zu überführen, in der das Host-Element (315b) nun den korrekten FQDN der IA entsprechend der Zuweisung an ein konkretes IED (100) ausweist. Der IIC wird entweder automatisch aktiv, sobald eine neue Ingress-Ressource (311) mit einem noch unvollständigen Host-Element (315a) in der Cluster-Konfiguration erzeugt oder verändert wird, oder aber der IIC wird als Präprozessor automatisch gestartet, sobald eine Industrial App (101) in einen Industrial Cluster (300) installiert wird. Eine ständige Überwachung kann beispielsweise in Form eines Kubernetes Custom Controllers realisiert sein, der per ListWatcher (https://github.com/kubernetes/clientgo/blob/master/tools/cac he/listwatch.go) über Änderungen an Ingress-Ressourcen (311) mit Labeln (312) informiert wird.

Der IIC funktioniert dabei prinzipiell wie folgt:
1. Ist eine Ingress-Ressource (311) mit einer Markierung (312) beispielsweise in Form eines Labels versehen, die diesen ING als Teil einer IA (101) markiert?
   a. Nein: ING ignorieren. Gegebenenfalls weiteren ING bearbeiten.
   b. Ja: weiter.
2. Ist das Host-Element (315a) dieses ING (311) ein FQDN/Hostname, der nur aus genau einem DNS-Label besteht? Wie beispielsweise "app1", aber nicht "app1.akz1.kunde.com"?
   a. Nein: ING ignorieren, gegebenenfalls weiteren ING bearbeiten.
   b. Ja: weiter.
3. Ermittle anhand des Wertes der Markierung (312) am ING (311) die zugehörige Knotenressource N (313): der Wert der Markierung ist der Name von N. Ermittle das AKZ (314a) von N, dieses ist zugleich das AKZ des zugehörigen IED (100).
   - Ändere das Host-Element (315a) von ING (311) zu (315b), indem der Wert von H wie folgt berechnet wird:
      H (315b) := H(315a) + "." + AKZ (314a) .
      Hierbei repräsentiert der "+"-Operator die Konkatenierungsoperation auf Zeichenketten.
   - Nächster ING, soweit vorhanden und passend.

Anwender können somit per DNS-Namen im Anlagen AKZ und auf direktem Weg durch das eigene Automatisierungsnetz auf ihre Industrial Apps auf den Industrial Edges zugreifen. DNS-Namen von Industrial Apps können anhand der AKZ-Hierarchie der Kundenanlagen automatisch registriert werden.

Industrielle Anwender können damit ihre Industrial Apps auf einfachste Weise anhand der ihnen vertrauten AKZ-basierten DNS-Namen erreichen. Zudem wird ein automatisches Nachführen der DNS-Namen anhand der tatsächlich installierten Industrial Apps bei Änderungen ermöglicht. In der Folge ist ein administrativ einfaches und damit klares Vertrauensverhältnis zwischen IT und OT für ein sicheres dynamisches Registrieren von DNS-Namen für Industrial Apps gegeben. Technische Probleme des "klassischen" URL-Rewritings in Verbindung mit dem Zwang, möglichst wenige, statisch registrierte DNS-Einträge benutzen zu müssen, werden vermieden.

Neu ist das automatische Registrieren der DNS-Namen von Industrial Apps anhand der AKZ-Hierarchie der Kundenanlagen, insbesondere anhand des AKZ der jeweiligen Industrial Edge-Geräte durch einen DNS-Ingress-Controller (DIC, 310), einen IndApp-Ingress-Controller (IIC, 320) und die zugehörigen Datenstrukturen bzw. Markierungen.

## Patentansprüche

1. Verfahren zur Adressierung einer industriellen Anwendung (IA) auf einem industriellen Knoten (100; IED) in einem industriellen Cluster (300; IC) mit verwalteten Ressourcen (IED, IA),
**dadurch gekennzeichnet,**
**dass** in einem ersten Schritt mittels eines DNS-Ingress-Dienstes (DIC) wiederkehrend in dem Cluster (300) konfigurierte Ingress-Ressourcen und zugehörige Knoten-Ressourcen ermittelt und ausgewertet werden, wobei
bei der Auswertung der Knoten-Ressourcen anhand derer Host-Elemente deren Pfade zu den Ingress-Ressourcen ermittelt werden,
**dass** in einem zweiten Schritt mittels eines Anwendungs-Ingress-Dienstes (IEC; 320) zu den Knoten-Ressourcen auf Basis eines zugeordneten industriellen Anlagenkennzeichens ein Name zur Registrierung der Anwendung (IA) im allgemeinen DNS-Dienst (211; EDNSS) gebildet wird,
**dass** in einem dritten Schritt mittels des DNS-Ingress-Dienstes (DIC) im allgemeinen DNS-Dienst (211; EDNSS) zumindest eine Adressinformation zu zumindest einer zugeordneten Ingress-Komponente zusammen mit dem gebildeten Namen registriert werden, und
**dass** in einem vierten Schritt zur Adressierung der Anwendung (IA) eine das Anlagenkennzeichen umfassende Anfragemeldung an den allgemeinen DNS-Dienst (211; EDNSS) gesendet und in einer Antwortnachricht des allgemeinen DNS-Dienstes (211; EDNSS) der dazu registrierte Name und Adressinformation zurückgemeldet und zur Adressierung der Anwendung (IA) verwendet wird.

2. Verfahren nach Patentanspruch 1,
**dadurch gekennzeichnet,**
**dass** die Ressourcen und Knoten (100; IED) im industriellen Cluster (300) durch ein Kubernetes-Verwaltungssystem verwaltet werden.

3. Verfahren nach einem der vorhergehenden Patentansprüche,
**dadurch gekennzeichnet,**
**dass** durch den DNS-Ingress-Dienst (DIC) Pfade mit identischem Host-Anteil gruppiert werden.

4. Verfahren nach einem der vorhergehenden Patentansprüche,
**dadurch gekennzeichnet,**
**dass** in dem zweiten Schritt der Anwendungs-Ingress-Dienst (IEC; 320) eine unvollständige Host-Information der Anwendung bei deren Registrierung für einen bestimmten Knoten (100; IED) zu einer vollständigen Host-Information ergänzt, wobei der unvollständigen Host-Information eine Adressierungsinformation für den Knoten hinzugefügt wird.

5. Anwendungs-Ingress-Dienst (IEC; 320) für ein Verfahren zur Adressierung einer industriellen Anwendung (IA) auf einem industriellen Knoten (100; IED) in einem industriellen Cluster (IC; 300) mit verwalteten Ressourcen gemäß Patentanspruch 1,
**dadurch gekennzeichnet,**
**dass** der Anwendungs-Ingress-Dienst (IEC; 320) dazu eingerichtet ist, zu den Knoten-Ressourcen auf Basis eines zugeordneten industriellen Anlagenkennzeichens einen Namen zur Registrierung im allgemeinen DNS-Dienst (211; EDNSS) zu bilden.

6. DNS-Ingress-Dienst (DIC) für ein Verfahren zur Adressierung einer industriellen Anwendung (IA) auf einem industriellen Knoten (100; IED) in einem industriellen Cluster (IC; 300) mit verwalteten Ressourcen gemäß Patentanspruch 1,
**dadurch gekennzeichnet,**
**dass** der DNS-Ingress-Dienst (DIC) dazu eingerichtet ist, wiederkehrend in dem Cluster (300) konfigurierte Ingress-Ressourcen und zugehörige Knoten-Ressourcen zu ermitteln und auszuwerten, und im allgemeinen DNS-Dienst (211; EDNSS) zumindest eine Adressinformationen zu zumindest einer zugeordneten Ingress-Komponente zusammen mit dem gebildeten Namen zu registrieren.
